(19)

**Europäisches Patentamt**

**European Patent Office**

**Office européen des brevets**

(11) **EP 4 202 481 A1**

(12) **EUROPEAN PATENT APPLICATION**

(43) Date of publication:
28.06.2023 Bulletin 2023/26

(21) Application number: 21216246.5

(22) Date of filing: 21.12.2021

(51) International Patent Classification (IPC):
$G01S\ 7/484^{(2006.01)}$   $G01S\ 7/4865^{(2020.01)}$
$G01S\ 7/487^{(2006.01)}$   $G01S\ 17/10^{(2020.01)}$
$G01S\ 17/42^{(2006.01)}$   $G01S\ 17/86^{(2020.01)}$
$G01S\ 17/89^{(2020.01)}$

(52) Cooperative Patent Classification (CPC):
G01S 17/42; **G01S 7/484; G01S 7/4865;**
**G01S 7/487; G01S 17/10;** G01S 17/86; G01S 17/89

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Hexagon Technology Center GmbH**
**9435 Heerbrugg (CH)**

(72) Inventor: **HINDERLING, Jürg**
**9437 Marbach (CH)**

(74) Representative: **Kaminski Harmann**
**Patentanwälte AG**
**Landstrasse 124**
**9490 Vaduz (LI)**

(54) **OPTO-ELECTRONIC DISTANCE MEASURING MODULE FOR A SURVEYING DEVICE WITH PULSE COMPRESSION BY CROSS-CORRELATION FOR A BIPOLAR RECEIVER OUTPUT SIGNAL**

(57) The invention relates to an opto-electronic distance measuring module and a surveying device (1) comprising the opto-electronic distance measuring module. The opto-electronic distance measuring module comprises a laser diode or a low power fiber laser as emission unit of a distance measuring beam (15), wherein a finite emission code sequence (16, 16') with N chips (17) is emitted and cross-correlated with a reference signal (30) for generating a compressed pulse (35, 36, 37). In order to provide sufficient pulse compression and accurate timing of the compressed pulse (35, 36, 37), the reference signal (30) is configured to have a number of chips (17) larger than N and is formed by reference signal components (33, 33') which take up a bipolar shape of expected receiver output signal components which can be assigned to respective light pulses (18) of the emission code sequence (16, 16').

Fig.6

EP 4 202 481 A1

**Description**

The present invention relates to an opto-electronic distance measuring module configured for use in a measurement device for geodetic surveying, building construction, or topographic mapping. For the sake of simplicity, in the following it is referred to such measurement devices as so-called "surveying devices". For example, the surveying device is embodied as tachymeter, total station, laser profiler, or laser scanner.

Coordinate measurement technology devices for measuring target objects, such as e.g. surveying instruments, frequently operate on the basis of electro-optical measurement systems. These devices generally emit optical radiation, typically laser radiation in the visible or near infrared spectral range, in the direction of the target object to be measured, in order to determine the distance between the device and the target. Using angle measuring means, also the direction in which the target object is sampled, can be determined. By measuring the distance and angular position of the target, the 3D coordinates of said target, e.g. given in polar coordinates, are determined and typically subsequently processed further. For example, the 3D coordinates are stored in the form of a point cloud, which is further processed to generate a digital 3D spatial model of the environment, e.g. a vector file model or a mesh model.

The target object to be measured in the surveying, construction, or mapping process reflects a portion of the emitted radiation back to the device, where it is received and converted into an electrical signal for distance determination. In addition to the measurement of naturally present targets, it is also possible to measure man-made targets, e.g. so-called cooperative targets configured to provide a specific reflective property, thereby supporting a precise coordinate measurement or target point identification. For example, cooperative targets are embodied as reflectors or retroreflectors such as cube corner reflectors, cat eye reflectors, or reflecting tapes; or as spherical tooling balls.

Especially for surveying devices with scanning functionality, the measured and processed data may be processed to represent a digital twin of the scanned environment or object surfaces. These surveying instruments are equipped with a laser ranging module (LiDAR) preferably comprising a laser source providing high peak power in the form of pulses in the kilohertz or megahertz range for generating a measuring beam of high sensitivity. Such lasers are typically fiber lasers; laser diode seeded optical amplifiers, e.g. fiber amplifiers; or solid-state lasers, e.g. microchip-lasers. These lasers are usually complex, need electrical power of several watts, and are expensive.

Nowadays, there is a need to further miniaturize surveying devices, e.g. in order to provide improved movability and increased application options, and to decrease complexity and to simplify usability, without losing sensitivity and accuracy. Often, conventional laser arrangements oppose the implementation of these goals. For example, packaging and overall setup of a surveying device is often driven by requirements arising from the laser arrangements, which, for example, are often bulky, heavy, and produce a lot of heat.

In contrast, laser diodes or low power seeded single-stage single-mode fibers are small, provide an excellent plug-in efficiency, and are comparatively inexpensive. Unfortunately, the laser peak power of such compact lasers is limited, wherein especially single-mode laser diodes have typically less than 10 watts peak power. For example, such single-mode laser diodes are beneficial when small well defined spot sizes are measured over large distances such as 100 m or 1 km. Therefore, most scanning surveying devices are equipped with multistage fiber lasers comprising a spatial single-mode fiber at the output side delivering high peak power of several kilowatts. However, when the measurement rate has to be in the megahertz range laser diodes are typically too weak to be used to precisely measure distances over such long measurement ranges.

It is therefore an object of the present invention to provide an optoelectronic distance measuring module which overcomes the above-mentioned deficiencies of the prior art.

A particular object is to provide an opto-electronic distance measuring module, particularly foreseen for long measurement ranges, which provides for further miniaturization, decreased complexity, and simplified usability of a surveying device.

These objects are achieved by the realization of at least part of the characterizing features of the independent claims. Features, which further develop the invention in an alternative or advantageous manner are described in some of the other features of the independent claims and in the dependent claims.

According to one aspect of the invention, these objects are addressed by providing an opto-electronic distance measuring module, with a beneficial implementation and usage of a laser diode in such a way that the laser diode provides for long range and high-speed distance measurements.

By way of example, a low-energy pulse group is emitted, i.e. a series of (sub-)pulses having a few watts, which provides usability of a spatial single-mode laser diode for distance measurements at long measurement ranges, even when a point measurement rate is at a level of several million points per second. In addition, the lower peak power of the pulse group keeps the average power low, which matches better with properties of laser diodes and their lifetime is increased because of lower stress.

However, such a multi-pulse modulation scheme consisting of pulse sequences of sub-pulses has several disadvantages, e.g. that the signal and detector noise are larger than for a single pulse emission; that the target echo of the pulse sequence is buried in the received and sampled waveform and cannot be recognized; and that two or more targets hit by a distance measuring beam cannot easily separated in case the hitting two or more targets are spaced from each other less than the distance range associated to the emission duration of the sequence of the sub-pulses.

The invention relates to an opto-electronic distance measuring module configured for use in a surveying device, e.g. a measurement device for geodetic surveying, building construction, or topographic mapping. For example, the surveying device is embodied as tachymeter, total station, laser profiler, or laser scanner.

The distance measuring module comprises an emission unit with a laser diode, e.g. a spatial single-mode laser diode, or a low power fiber laser, and is configured to provide for emission of light pulses by the laser diode or the low power fiber laser, wherein the light pulses form a finite emission code sequence with N chips. In particular, the finite emission code sequence is a code sequence with minimal autocorrelation. Elements of a code sequence are called chips. The distance measuring module further provides for processing of a return signal that corresponds to emitted light pulses returning from a target in the environment to generate a measured receiver output signal. For example, the return signal is provided by an optical receiver unit configured to detect the reflected or scattered light pulses from the target, e.g. wherein the detection principle is carried out incoherently.

For example, receiver electronics of the distance measuring unit, e.g. comprising a transimpedance amplifier followed by a subsequent chain of further signal amplifiers and filters, transform an incoming pulse signal, e.g. of initially Gaussian shape, detected by an opto-electronic receiver into a corresponding sinusoidal electronic (analog and continuous) output signal which ideally has two extrema. More generally speaking, in an optimal case, e.g. in a noise-free case and with sufficient signal strength of the light pulses returning from the target, the measured receiver output signal has a shape of an expected receiver output signal formed by expected receiver output signal components of bipolar shape, wherein each of the expected receiver output signal components can be (e.g. uniquely) assigned to a respective light pulse. In reality, the components of the electronic receiver output signals have the shape of heavily damped band pass waveforms comprising a dominant maximum and a minimum with a short trailing edge, wherein the waveforms are typically free of DC-offset. The predominant portion of the signal components may thus still be referred to as exhibiting the bipolar shape.

The distance measuring module is further configured to provide a reference signal that is similar to the expected receiver output signal and encodes reference pulses forming a finite reference code sequence with a number of chips larger than N. The reference signal is formed by reference signal components which take up the bipolar shape of the expected receiver output signal components and each of the reference signal components can be (e.g. uniquely) assigned to a respective reference pulse of the reference code sequence. By way of example, the number of chips of the reference code sequence is three times N, four times N, or five times N. Benefits of increasing the length of the reference code sequence are an increase of the number of coefficients and an emergence of new degrees of freedom for modelling and optimizing a processing output such as a signal output of a cross-correlation.

The reference signal is used by the distance measuring module to execute a cross-correlation between the measured receiver output signal and the reference signal to generate a cross-correlation function, and to identify and time a compressed pulse in the cross-correlation function.

In other words, instead of emitting the optical energy in the form of one single pulse, a group of P pulses or pulselets is emitted according to a finitelength emission code such that the energy is distributed and the peak power of a pulselet is reduced. At receiver side, the received signals are cross-correlated by applying a so-called mismatched filter signal such that the entire energy of a received pulse sequence is effectively compressed into a single intense and narrow virtual peak with low residual sidelobes. Laser pulse sequences arranged accordingly to an appropriate digital code of finite length may therefore reproduce the high resolution and low background that are otherwise provided by a short and high-power single pulse.

In one embodiment, the emission code sequence is a unipolar pulse sequence of less than 32 pulses. Many known digital codes yielding a minimal aperiodic autocorrelation (e.g. wherein correlation absolute values are close to zero for all non-zero time shifts or timing clocks) are bipolar, i.e. the codes comprise zero, positive, and negative code elements. For example, the unipolar pulse sequence corresponds to a code with a bipolar pulse pattern, e.g. one of a Barker code, a Compound Barker code, an Ipatiov code, a complementary Golay code, an M-Sequence, and a Legendre sequence, wherein either the negative or positive values of the code with the bipolar pulse pattern are set to zero (no light pulse) and in return the light pulses correspond to the positive or negative values of the code with the bipolar pulse pattern. For example, the code sequence {1,0,1,0,0,0} is equivalent to the emission of two subpulses or pulselets in a time series of six chips exactly when the elements '1' occur.

In particular, additional chips with value zero (no light pulse) are added between neighboring chips of the code with the bipolar pulse pattern to form the emission code sequence. This is also referred to as so-called zero-padding. By way of example, additional chips with value zero are added on the right of each of the chips of the code with the bipolar pulse pattern to form the emission code sequence. Thus, the number of chips of the emission code sequence is an integer multiple of the number of chips of the code with the bipolar pulse pattern.

In a further embodiment, the reference signal is a continuous signal with several extrema, wherein each of the reference signal components is a continuous functional section of the reference signal with two extrema. For example, each of the reference signal components has a sinusoidal or sinusoidal-like shape and comprises positive and negative values, e.g. wherein the amplitudes of the reference signal components vary from component to component.

In a further embodiment, the processing of the return signal is provided in such a way that the expected receiver output signal components all have the same temporal signal width, wherein the reference signal is provided in such a way that each of the reference signal components has the same temporal signal width as the expected receiver output signal components.

In a further embodiment, the reference signal is a discrete signal with several positive and negative values, wherein each of the reference signal components comprises a positive and a negative value. Here, the discrete signal takes up the bipolar, e.g. sinusoidal or sinusoidal-like, shape of the expected receiver output signal. For example, the positive and negative value have the same absolute value and only differ by their sign.

In a further embodiment, each of the reference signal components is comprised by two neighboring chips, wherein one of the two neighboring chips comprises the positive value and the other of the two neighboring chips comprises the negative value of the respective reference signal component

The receiver output signal may be known in the form of a pure analog and continuous signal. Alternatively, an analog-to-digital converter samples the sinusoidal or bipolar-like receiver output signal, wherein the signal can be resampled to any point in time (neglecting a small loss of information, e.g. due to amplitude quantization) as long as the Nyquist theorem is fulfilled. Also the reference function may be taken as a continuous analog signal and the pulse compression is done by a pseudo-continuous cross-correlation between the two analog and continuous signals.

However, pulse compression by correlating analog continuous functions requires rather intensive processing resources. Thus, e.g. for real time signal processing, the receiver output signal is sampled with an analog-to-digital converter (ADC) at a rate above the Nyquist frequency of the signal. The continuous reference signal is also (e.g. mathematically) converted into a sampled signal series, wherein the sampling can be chosen from a low rate such as the chip-rate (1/time interval of a chip) up to higher rates such as the ADC rate or even higher (as long as it is synchronized to the ADC sampling rate). In order to keep processing power low, it is beneficial to convert the reference signal into a discrete filter sequence comprising a discrete sequence of analog values. For example, the reference signal is chosen to be a discrete signal, e.g. wherein the sinusoidal or sinusoidal-like reference signal components are mathematically sampled at a fraction of the intervals of the chip length of the emission code sequence (and the reference code sequence), e.g. in phase of the maximum and the minimum values of the sinusoidal or sinusoidal-like reference signal components.

Such a discrete reference sequence simplifies the processing of the cross-correlation. By way of example, for the cross-correlation thus the pulse compression, the time samples of the emitted emission code sequence are taken at times corresponding to the chip-intervals. This may be guaranteed by a coding unit which controls the chip intervals of the emitter unit and the sampling points of the analog-to-digital converter at the receiver. Therefore, chip intervals and sampling time are synchronized. For example, the chip and the sampling intervals are fully synchronized to each other, wherein the chip interval is typically two to eight times longer than the sampling interval of the ADC.

In a further embodiment, for the cross-correlation several time samples, e.g. four time samples, of the measured receiver output signal are taken at times corresponding to a chip-interval of the reference signal, e.g. wherein a coding unit of the distance measuring module is configured to control on the one hand the chip interval of the emission of the finite emission code sequence and on the other hand the sampling rate of an analog-to-digital converter of the distance measuring module used for analyzing the measured receiver output signal.

In a simplified embodiment, for the cross-correlation time samples of the measured receiver output signal are taken at times corresponding to a chip-interval of the reference signal, e.g. wherein a coding unit of the distance measuring module is configured to control the chip interval of the emission of the finite emission code sequence and sampling points of an analog-to-digital converter of the distance measuring module used for analyzing the measured receiver output signal.

For deriving an accurate distance, a two-step procedure can be used. The localization of the compressed pulse in the cross-correlation function provides a rough estimate of the target distance. In a further step, the time is interpolated by state-of-the art processing, e.g. as used in the so-called waveform digitizing (WFD) method. For example, a sampling interpolation algorithm is used to locate the peak of the compressed pulse with sub-picosecond accuracy. Alternatively, or in addition, a resampling method to handle the sampled compressed pulse as a continuous analog signal which yields to the full resolution with a precision down to the Cramer Rao limit is used.

Thus, in a further embodiment, the distance measuring module is configured to identify the compressed pulse in a digital representation of the cross-correlation function, and to provide upon detection of the compressed pulse an interpolation of the compressed pulse between sampling points of the digital representation of the cross-correlation function to time the compressed pulse.

The so-called waveform digitizer (WFD) principle is a well-known LiDAR technology using the pulsed or phase difference coding methods. Its architecture typically comprises an optical transmission and an optoelectronic receiving unit, wherein the optoelectronic receiving unit comprises a photodiode, e.g. preferably with an intrinsic amplification, a low-noise broadband transimpedance amplifier, subsequent amplifier stages, several filters for signal shaping, and a fast sampling analog-digital converter circuit (ADC) in the range of several hundred MHz up to several GHz, depending on the required time and amplitude resolution. Since the received signals are available in digital format, the signal processing and calibration is performed by a processing unit whereas the processing core can be a field programmable gate array (FPGA) or a digital signal processor (DSP). By using the WFD principle, echo detection, echo identification, and the seamless cross-correlation between the finite length reference signal and the arriving samples of the received signal are done digitally and shifted sample by sample in real time. Every detected, identified and compressed pulse is exploited to get relevant parameters for timing the compressed pulse, e.g. parameters such as pulse identification, signal strength, saturation ratio, signal-to-noise ratio (SNR), time-of-flight, pulse shape quality indicator, overlap contribution, and so forth.

The reference signal may be provided by optimization using a merit function. For example, the merit function is a scalar function expressing the so-called Peak-to-SideLobe Ratio (SLR) of a cross-correlation between the received signal and the reference function, wherein the M amplitude coefficients R = {r1, r2, .. , rM} of the reference function are parameters which have to be found. For a so-called double target case where the temporal separation between two pulse sequences is less than the length of the reference function, an appropriate combination of received and reference signal is applied for the merit function. In principle, for every pulse separation an optimized reference signal can be deduced. However, this may be contrary to the objective of simple real time processing. A compromise is to setup a merit function which includes the SLRs of different received double-echo signals related to differently separated targets. In other words, the merit function is a weighted sum of the SLRs of the different compressed double echo signals. The final amplitude coefficients R are computed by numerical optimization methods.

In a further embodiment, the reference signal is provided by an optimization using a merit function, wherein the merit function is a weighted sum of functions expressing side lobe ratios of cross-correlations between a common reference function and different candidate receiver output signals associated to expected receiver output signals for different double-echoes of a received light pulse, wherein the different double-echoes differ from each other by different pulse spacings between the echoes of the received light pulse and the common reference function is associated to one of the different pulse spacings.

Particularly in case of a scanning surveying device the moving laser beam can hit from one emission code sequence to the next emission code sequence a completely different distance. Thus, the sequence order between emission and return of sequentially emitted emission code sequences can be interchanged or overlapped, which requires a way to provide for pulse discrimination and identification (so-called ambiguity problem).

In the prior art, ambiguity resolution is achievable by emitting different multi-pulse sequences. For example, intervals or pulse spacing modulations are known, in which the spacing between the pulse groups but also the spacing within a pulse group is varied. In the simplest cases, single pulses are emitted with interval modulation or, in more robust methods, double or triple pulses with distance modulation of the sub-pulses are used. However, these methods are typically still unable to separate multiple targets that are closer together than the length of the pulse train. The pattern of overlapping multi-pulse sequences is corrupted and demodulation becomes erroneous. In addition, the signal-to-noise ratio (SNR) may be reduced by additive electronic and optical noise.

Improved ambiguity resolution is achievable by pulse compression as described above, based on unipolar emission coding and a bipolar sinus-like receiver output signal and using a designed bipolar sinus-like reference signal for well reduced side-lobes outside the compressed main-peak.

In a further embodiment, the distance measuring module is configured to coordinate the emission of the light pulses to generate different finite emission code sequences with N chips each. Each of the different finite emission code sequences is associated to a respective expected receiver output signal formed by expected receiver output signal components of bipolar shape (bipolar-like or sinusoidal-like as described above), wherein each of the expected receiver output signal components can be (e.g. uniquely) assigned to a respective light pulse. The distance measuring module is further configured to provide different reference signals, wherein each of the different reference signals is similar to a different one of the expected receiver output signals and encodes reference pulses forming a finite reference code sequence with a number of chips larger than N.

Similar to the reference signal described above, each of the reference signals is formed by reference signal components, which take up the bipolar shape of the expected receiver output signal components, and each of the reference signal components can be assigned to a respective reference pulse of the reference code sequence.

Cross-correlations are executed in parallel between the measured receiver output signal with each of the different reference signals to (simultaneously) generate different cross-correlation functions associated to each of the different reference signals. A compressed pulse is identified and timed in each of the cross-correlation functions (which are created in parallel), wherein the distance measuring module is configured to associate each of the compressed pulses to a respective one of different finite emission code sequences.

Thus, for example, the distance measuring module can be configured to provide a sequential emission pattern of the different finite emission code sequences and to compare the sequential emission pattern with the timing of the compressed pulses associated to each of the cross-correlation functions to provide for range ambiguity correction.

The invention further relates to a surveying device for the three-dimensional spatial measurement of an environment by an optical distance measuring beam, particularly wherein the surveying device is embodied as tachymeter, total station, laser profiler, or laser scanner, wherein the surveying device comprises an opto-electronic distance measuring module according to one of the above-described embodiments.

The opto-electronic distance measuring module and the surveying device according to the different aspects of the invention are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,

Fig. 1: an exemplary embodiment of a surveying device;

Fig. 2: an exemplary application of a surveying device for staking out different measuring positions on the ground;

Fig. 3: another exemplary application of a surveying device for scanning an environment;

Fig. 4: schematic embodiments of different emission code sequences;

Fig. 5: a block diagram of an exemplary embodiment of a time-of-flight electronic distance measuring module based on the WFD principle;

Fig. 6: schematic embodiment of an emission code sequence, a corresponding measured receiver output signal, and a reference signal;

Fig. 7: a zoomed section of the reference signal of Fig. 6;

Fig. 8: schematic depiction of a cross-correlation function from a cross-correlation between measured receiver output signal and a reference signal;

Fig. 9: schematic depiction of a cross-correlation function from a cross-correlation between measured receiver output signal and a reference signal in a two-target case;

Fig. 10: schematic depiction of a derivation of a discrete reference signal;

Fig. 11: schematic depiction of a synchronization of chip intervals and sampling time;

Fig. 12: schematic depiction of another derivation of a discrete reference signal.

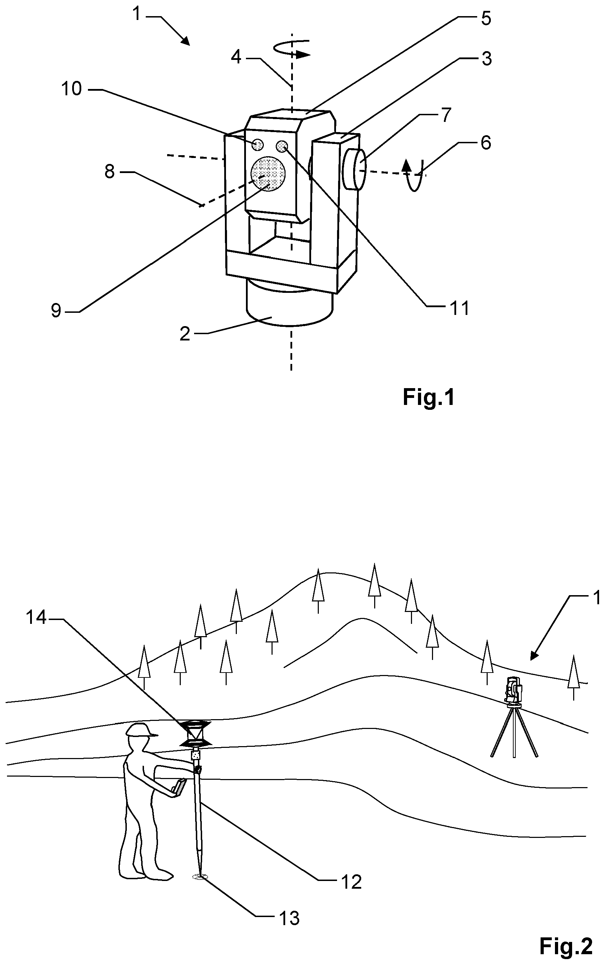

**Figure 1** exemplarily illustrates an embodiment of a surveying device 1, e.g. a tachymeter or a total station. The surveying device comprises a base 2, which is mountable onto a holding apparatus, e.g. in the form of a tripod stand (not shown). A support structure 3 is mounted on the base 2 such that it can be rotated about a vertical axis 4, wherein the support structure 3 holds a targeting component 5 which can be rotated about a horizontal axis 6. Both the support structure 3 and the targeting component 5 are rotatable in a motorized fashion, e.g. by means of a motorized shaft 7, wherein the orientations of the support structure 3 and the targeting component 5 may be determined by corresponding angle encoders (not shown).

The targeting component 5 is configured to emit a distance measuring beam along an aiming axis 8 towards a target object. By way of example, the objective lens 9 is the same for the transmission and the reception channel of the distance measuring beam. The targeting component 5 houses an opto-electronic distance meter configured to determine a distance to a single target point targeted by the aiming axis 8, based on at least part of the distance measuring beam returning from the target. By way of example, parts of the opto-electronic distance meter, e.g. the beam source, may also be arranged in the support structure 3, wherein a fiber based optical waveguide system connects the elements integrated in the support structure 3 through the shaft 7 into the targeting component 5.

Typically surveying devices further comprise additional sensors such as a so-called overview camera 10, e.g. to provide a user with an image of the scene to be measured and for an automatic coarse target search functionality. By way of example, the coarse target search functionality provides identification of a cooperative target such as a retroreflector, such that the surveying device can automatically move the targeting component 5 to point towards the cooperative target. Often a further so-called fine targeting camera, e.g. arranged co-axial to the targeting axis 8 is used to precisely point the targeting component 5 and thus the targeting axis 8 onto the cooperative target (so-called locking of the beam onto the cooperative target) and to provide automatic tracking of the cooperative target. For example, the objective lens 9 is a multifunctional optical component, e.g. an imaging optics for the fine targeting camera, a transmission and receiving optics for the distance measuring unit, and optionally the front lens of a visual telescope for manually aiming the targeting axis to a target to be measured.

The surveying device 1 may further comprise additional sensors 11, e.g. such as range imaging sensors to provide depth images of the scene or to provide gesture control of the surveying device 1.

Often, surveying devices are configured to move a distance measurement beam about two axes, e.g. the horizontal axis 6 and the vertical axis 4 in the given example, which are typically orthogonal to each other (so-called two-axis arrangement to move the distance measuring beam in the frame of a polar coordinate system).

For example, similar to the setup described above an industrial laser scanner typically comprises a base and a support, wherein the support is mounted on the base such that it is rotatable about a first rotational axis, often referred to as the slow rotation axis. A rotary body is mounted on the support such that it is rotatable about a second rotational axis being substantially orthogonal to the first rotational axis, often referred to as the fast axis since the rotation of the rotary body is typically faster than the rotation of the support. An optical distance measuring device, e.g. arranged in the support, is configured for acquiring distance measurement data. A transmitter is configured for transmitting a distance measuring beam along a target axis towards a target and a receiver is configured for detecting at least part of the distance measuring radiation returning as an echo from the target, e.g. by means of an objective and a lightsensitive sensor configured for measuring the time-of-flight of laser pulses.

The distance measuring radiation is transmitted from the support, e.g. parallel or co-axial to the fast rotation axis and deflected by a mirror surface of the rotary body, e.g. a plane mirror surface or a parabolic mirror surface, such that the distance measuring radiation is swiveled about the fast rotational axis. The amount of rotation of the support and the rotary body, respectively, can be determined by means of angle encoders configured for the acquisition of angular data, wherein the laser scanner is configured for associating the angular data to corresponding distance measurement data of the distance measuring device. Therefore, essentially the entire environment around the laser scanner can be spatially measured. The distance measurement unit typically stands out by its high ranging accuracy (mm or sub-mm range) and its high speed of at least 1 million points per second. In the prior art, such coordinate measurement instruments are typically equipped with complex and expensive laser modules. With the inventive modulation and signal processing scheme, comparably high performance can be achieved, for example, with low power single-mode laser diodes or simple single-stage fiber-lasers.

**Figure 2** depicts an exemplary use case of a surveying device 1, here configured as a total station, wherein the surveying device 1 and a survey pole 12 are used to stake out different measuring positions 13 on the ground.

The survey pole 12 has a rigid, rod-shaped body with a pointer tip for contacting a measuring point 13 on the ground. The pole 12 comprises a cooperative target 14, e.g. retro-reflector means, as position giving means for making available the coordinative determination of a referenced position at the pole 12, wherein the cooperative target 14 is positioned at a known position relative to the tip of the pole. The total station 1 is used for determining the coordinates of the cooperative target 14, which then provides - given the known position relative to the tip and given a known orientation of the pole - the coordinates of the measuring point 13.

The total station 1 can also be used for scanning applications such as recording point clouds of construction sites, streets or bridges. During a scanning process the distance measuring beam is swept over object surfaces by moving the targeting component of the total station with respect to two axes. Comparably to a laser scanner, the fast rotation movements are done by the targeting component which is of lower weight than the support structure. The optoelectronic distance meter is configured to record distances and, together with the angular information regarding the orientation of the targeting component, point clouds of surfaces of natural or human made objects with a very high ranging accuracy (mm or sub-mm range).

Because tachymeters or total stations are mobile (e.g. used in the field), battery driven and of small size, it is beneficial to have an integrated laser source of low power and high efficiency, e.g. a laser diode. In the past, the achievable measurement rates were typically in the range of ten thousand to hundred thousand points per second. Using the inventive modulation and signal processing scheme a measurement point rate of at least one million points per second is achievable, e.g. with a single-mode laser diode of low power.

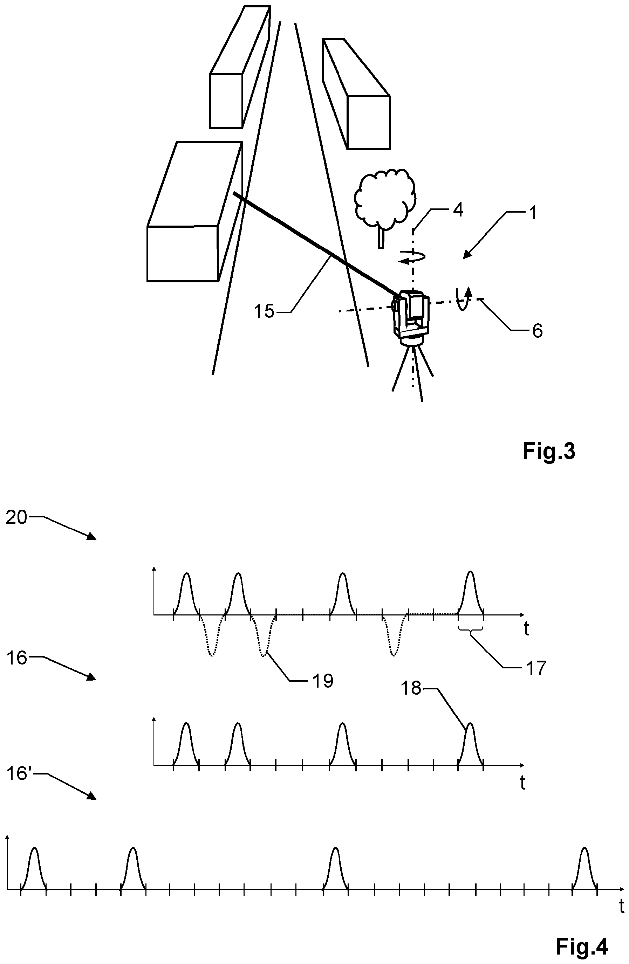

**Figure 3** depicts an exemplary use case of a surveying device 1, here configured as a scanning total station, wherein a street with adjacent buildings is measured. Here, the surveying device 1 scans a distance measurement beam 15 about two axes 4, 6 in order to scan the environment for generating a 3D point cloud representing the environment. The surveying device 1 comprises a distance measuring module configured for distance measurement on a natural (diffusively scattering) target, e.g. an arbitrary point on a wall of a building.

**Figure 4** schematically depicts in the middle and at the bottom different emission code sequences 16, 16' as a function of time t when using a laser diode as radiation source in a distance measuring module. In the example given in the middle of the figure, the emission code sequence 16 comprises twelve chips 17 and four emitted laser pulses 18. The emission code sequence 16' at the bottom is an extended version of the emission code sequence in the middle of the figure, wherein so-called zero-padding has been applied. Additional chips with value zero (no light pulse) are added between neighboring chips of the initial code 16, here leading to an emission code sequence 16' with twenty-three chips. For example, zero-padding provides advantages for laser pule coding by code sequences which comprise multiple equal values (e.g. multiple logical 1s) following one another (see below).

By way of example, the emission code sequences correspond to a known finite code sequence with minimal autocorrelation, wherein the negative values 19 of the known binary code sequence of finite length are set to zero (no light pulse). This is exemplified by the top and the middle of the figure, wherein an initial bipolar code sequence 20 depicted at the top of the figure with values 1-11-10010-1001 is used to generate the emission code sequence 16 in the middle of the figure by neglecting the negative values 19.

Many schemes are known to convert bipolar pulse codes into sequences of unipolar pulses, e.g. by Manchester coding. Since LiDAR devices preferably comprise laser sources with a modulation scheme of energy pulses, the modulation is of non-coherent type. Thus, the applied modulation is unipolar where an emitted pulse or sub-pulse represents a logical 1 and no pulse within a timing chip a logical 0. Therefore, when using known binary code sequences of finite length with minimal autocorrelation, a conversion of bipolar sequences into unipolar sequences is needed.

A laser diode or a miniature seeded fiber amplifier is also able to emit pulses of different energies or amplitudes, such that unipolar or monopolar code sequences with arbitrary numbers could be used. However, when keeping laser pulse energy or peak power constant, it typically becomes much easier to achieve ranging accuracy of highest quality. Therefore, it may be regarded beneficial to use digital binary coding schemes with minimal autocorrelation, wherein the originally bipolar codes are converted into unipolar Return-to-Zero (RZ) coding patterns.

Laser diodes are miniaturized and inexpensive radiation sources for distance measurement units but have limited peak power. To avoid this limit, instead of single pulses, pulse groups consisting of a uniform or interval-coded pulse sequence are transmitted. This ensures that higher average transmission powers are achieved. For example, burst sequences consisting of a regular pulse train with interruptions between the pulse trains, but also randomized pulse trains based on the coding principle of m-sequences or gold codes are known.

Compared to a single pulse measurement, long pulse sequences add additive noise to each pulse, which reduces the signal-to-noise ratio. Therefore, it is beneficial to use short pulse sequences in order to keep the signal-to-noise ratio comparatively high. A further benefit of short pulse sequences arises in the case of scanning surveying devices where the laser spot is scanned (moved) over a target surface. The longer the coding sequence the stronger the blurring of the measurement point. By way of example, pulse sequences between five (P=5) to 32 pulses (P≤32) in a code sequence are used. Short pulse sequences have also advantages with regard to the case of multi-returns, e.g. when the laser beam is hitting an edge of an object such that radiation is received from two target surfaces (so-called mixed pixel case). A non-corrupted target separation is achieved when the target separation is longer than the length of the emitted pulse sequence. Short pulse sequences are conceivable, for example, using Barker, Walsh, or Ipatov codes.

On-off keying (OOK) is one way of amplitude shift keying (ASK). Different approaches are known for designing on-off {1, 0} coded envelopes of transmitted carriers whose returns can be intensity or envelope detected, digitized, and non-coherently processed to extract and calculate a distance to a target surface. Examples are transmitting only the positive elements of a code (+1 → 1, -1 → 0) or Manchester encoding (+1 → 1 0, -1 → 0 1). Manchester encoding doubles the code length, which adds further noise compared to only using the positive (or the negative) elements.

By way of example, binary Barker codes of length thirteen are used: {1,1,1,1,1,-1,-1,1,1,-1,1,-1,1}, {1,-1,1,-1,1,1,1,-1,-1,1,1,1,1,1}, {-1,1,-1,1,-1,-1,1,1,1,-1,-1,-1,-1,-1}, {-1,-1,-1,-1,-1,1,1,1,-1,-1,1,1,-1}. When using only the positive elements of a code (+1 → 1, -1→ 0), the emission code sequence becomes: {1,1,1,1,1,0,0,1,1,0,1,0,1}, {1,0,1,0,1,1,0,0,1,1,1,1,1}, {0,1,0,1,0,0,1,1,0,0,0,0,0}, {0,0,0,0,0,1,1,0,0,1,0,1,0}, i.e. code sequences with nine or four pulses.

By way of another example, e.g. in order to provide a more uniform energy distribution, shorter binary Barker codes of length eleven may be used: {1,1,1,-1,-1,-1,1,1,-1,-1,1,-1}, {1,-1,1,1,-1,1,1,1,1,-1,-1,-1}, {-1,1,-1,-1,1,1,-1,-1,-1,-1,1,1,1,1},{-1,-1,-1,1,1,1,-1,1,1,-1,1}. When again only using the positive elements (+1 → 1, -1 → 0), these codes yield the following emission code sequences: {1,1,1,0,0,0,1,0,0,1,0}, {1,0,1,1,0,1,1,1,0,0,0}, {0,1,0,0,1,0,0,0,1,1,1}, {0,0,0,1,1,1,0,1,1,0,1}.

This simple unipolar encoding of the Barker 11 Code shows a rather uniform energy distribution for all four codes, the sequences consist of either five or six pulses which is a good compromise when more than one code is needed, e.g. to handle range ambiguity.

Barker codes allow short pulse sequences, wherein short pulse sequences have the advantage to keep the signal-to-noise ratio high. However, for pulse compression the quality of the Peak Side Lobe Ratio is reduced. Side Lobe peaks would become bigger and the crosstalk between overlapping pulse sequences are also increased. Anyway, short pulse series may represent a beneficial compromise.

Also other codes than Barker codes could be of short length, e.g. so-called complementary unipolar code pairs. In this case two complementary codes are emitted, one after the other, to the target to be measured. The cross-correlation of the pair of emitted pulse-groups with the pair of reference functions is complementary in sign unless at time shift zero.

The sum of the pair of cross-correlations yields a strong compressed pulse and a high Peak Side Lobe Ratio. However, when two targets are separated less than the length of the emitted sequence, the echoes partially overlap and the advantage of a high Peak Side Lobe Ratio is lost.

The method of splitting the main pulse into a sequence of sub-pulses increases the signal-to-noise ratio without increasing the peak power of the laser diode (e.g. an AlGaInP/GaInP semiconductor laser diode emitting at a wavelength of 660 nm). The pulse compression method using a reference function transfers the received sub-pulses mainly to a single pulse with a width of a single sub-pulse, so further processing on the compressed signal is simplified. The reference function may also consider the so-called mixed pixel case or range ambiguity problem where double targets can be better resolved than with a simple reference function or a burst modulation scheme.

By applying zero-padding to the coded sequence all ON-chips are of the same length so also the individual laser pulses have identical short length of a few 100 picoseconds which is beneficial for precision LiDAR (light detection and ranging) systems, e.g. in terms of temporal confinement of photons, spatial homogeneity of the beam far field, and constant polarization distribution.

By way of example, the Barker 13 code is transformed in a unipolar and zero-padded sequence. Zero-padding provides that all laser pulses indicating the value {1} are of the same length of typically a few 100 ps. The unipolar and zero-padded Barker 13 code takes the form: {1 0 1 0 1 0 1 0 1 0 0 0 0 0 1 0 1 0 0 0 1 0 0 0 1 0}. The code comprises 26 chips, i.e. length of this code is N=26, and nine pulses, also referred to as sub-pulses P=9.

Although the emitted and reflected nine laser pulses are sharp peaks in the time domain, electrical band pass-filtering for noise suppression and fulfilling of the Nyquist frequency related to the sampler (ADC), the waveform of the reflected sub-pulses typically have bipolar shape (see below).

Depending of the analog bandwidth of the receiver of the waveform digitizer and the analog-to-digital converter (ADC), a preferred chip length is designed such that its time interval is longer than the primary bipolar response of the receiver. The chip-length is given by the modulation interval of the emitter and corresponds to the time interval between two code elements, e.g. two laser pulses. For example, for an ADC with 1GS/s, the receiver bandwidth (BW) is chosen to be 300 MHz. Thus, a chip length with a length of 3/(2*BW) = 5nsec is used. In this case, the ADC collects five samples per received sub-pulse. The temporal length of the coded signal is 5 ns*N=130 ns, so the pulse train in air would have a length of 39 m. For a scanning surveying device, the lateral spatial resolution is decreased by the emission duration of 130 ns. When the laser beam is deflected by a rotation of 100 Hz and the target distance is 100 m, the lateral spatial resolution is broadened to 8 mm, which is acceptable for most surveying applications. Therefore, modulation according to Barker codes or so-called compound Barker codes of shorter length is an appropriate modulation scheme. Compound Barker codes are created by nesting an inner Barker code into an outer Barker code.

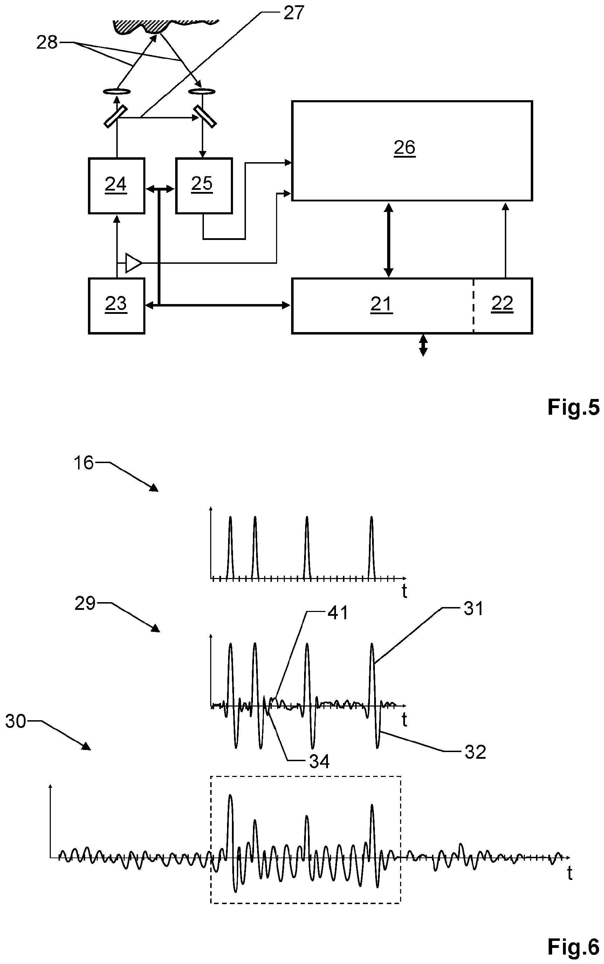

**Figure 5** depicts a block diagram of an exemplary embodiment of a time-of-flight electronic distance measuring module based on the so-called waveform digitizer (WFD) principle.

The functional processes with all modules are controlled by a control unit 21 with a power supply 22, e.g. wherein the time processes are defined by a central crystal oscillator of type TCXO (Temperature Compensated Crystal Oscillator) or OCXO (Oven Controlled Crystal Oscillator). The central crystal oscillator is also used as a ppm-precise time scale for the measurement of the time-of-flight. A frequency generator 23 generates the corresponding signals which, on the one hand, synchronize an optoelectronic transmitter 24 and, on the other hand, an optoelectronic receiver module 25 and a WFD unit 26.

The emitted laser signals run either serially or simultaneously through an internal light path 27 and an external light path 28. The external light path is directed towards a target object to be measured (pulses of the external light path are also referred to as stop pulses). The internal light path 27 is used in a known manner to deliver a so-called start pulse sequence to calibrate the absolute distance. For example, in the case of a simultaneous measurement of the internal and external light paths 27, 28, the combined received signal impinges on a receiver of the optoelectronic receiver unit 25. At short target distances, start and stop pulses may partially overlap. However, by using pulse compression as described above, the two signal sequences are separable and both time-of-flights from the start sequence and the stop sequence can be precisely measured.

The optoelectronic receiver unit 25 comprises, for example, a low-noise broadband transimpedance amplifier and a subsequent amplifier stage to amplify the signal as linearly as possible, wherein the amplified signal is then fed to a filter bank and a fast analog-digital converter circuit (ADC) with adapted time and amplitude resolution. WFD-based time-of-flight measurements of high accuracy (e.g. sub-mm) require typical ADC sampling speeds of at least 0.5 GHz up to a few GHz. In case of a 1 GHz sampling ADC the received signal has a sample interval of one nanosecond, which is five times shorter than the coding chip length of five nanoseconds at the emitter.

The WFD processing unit 26 is configured for executing the pulse compression by digitally cross-correlating the received and sampled return signal from the target with the corresponding reference function of the emitted code sequence. The reference function is digitally stored in a memory of the WFD processing unit 26, whereas, by way of example, the pseudo-continuous reference function is stored in a look-up table with a sequence of amplitudes with a short time interval corresponding to the sampling interval of the analog-to-digital converter. Thus, the pseudo-continuous reference function has a higher number density than the chip length at the emitter side coding. Because the sampling or number density of the reference function is higher than the chip length it is called to be pseudo-continuous. The cross-correlation between the finite length sequence of the reference function and the arriving samples of the received signal is done digitally sample-by-sample in real time, e.g. by a field programmable gate array (FPGA) or a digital signal processing unit (DSP) being part of the WFD processing unit 26. The time series of results of the cross-correlation is a pseudo-continuous output signal, which contains compressed pulse information. In other words, the compressed pulse is provided in a digital representation of the cross-correlation function. If a returned pulse sequence is contained in this so-called "compressed output signal", then a solitaire pulse of width of a single pulselet of the received coded pulse sequence would appear.

By way of example, the main part of the real time signal processing modules are located on the FPGA or DSP. A peak detection and peak-identifying module is following the signal compression module. This module is configured to stream the compressed output signal. If a compressed peak is detected, an identification step is carried out, for example, by checking the expected pulse shape. Simultaneously, a coarse distance is derived with a resolution of the pseudo-continuous cross correlation function. In a next step, the region of interest around the compressed pulse is fed to the fine distance estimation module. It provides an interpolation of the compressed pulse between temporal samples of the digital representation of the cross-correlation function, e.g. with an interpolation density of typically 10'000. Thus, the time resolution is in the range down to femtoseconds.

The WFD processing unit 26 is configured for executing a time interpolation of the compressed output signal with a precision in the micrometer distance range, e.g. by applying a sampling interpolation algorithm to locate a peak of the received signal with sub-picosecond accuracy. Alternatively, or in addition, the WFD unit 26 may implement a resampling method to handle the sampled received signal as a continuous signal which yields to the full resolution and precision down to the Cramer Rao limit.

The results and other data are output via interfaces of the control unit 21, wherein the control unit calculates the final distance and / or takes into account any calibrations and corrections such as range walk, temperature or air pressure influences.

**Figure 6** schematically depicts an emission code sequence 16, a corresponding measured receiver output signal 29, and a reference signal 30 to be used for executing a cross-correlation between the measured receiver output signal 29 and the reference signal 30 to generate a cross-correlation function.

Despite the emitted signal 16 being unipolar, an optoelectronic receiver module, e.g. comprising an amplifier and filter stage as described above with reference to Fig. 5, generates a bipolar, e.g. sinusoidal or sinusoidal-like, receiver output signal 29. The waveforms of the sub-pulses have the shape of a nearly critically damped oscillation, e.g. comprising two or three peaks. Thus, even in an ideal case, the receiver output signal 29 comprises a combination of several waveforms, wherein each of the waveforms has a primary 31 and a secondary 32 main swing component, and one or a few additional swing components 34. The primary main swing component 31 and the secondary main swing component 32 are in sum associated to nearly 100 % of the energy of the incoming pulse. Primary and secondary main swing components 31, 32 represent a binary-like impulse response of the opto-electronic receiver channel. Additionally, the signal-to-noise ratio of the received pulses in the receiver output signal 29 is degraded by electronic noise 41.

This signal shape is different to known signals previously used for applying a pulse compression method. Pulse compression between unipolar emitted sequences and received bipolar-like waveform is not known so far. Therefore, there is a need for a reference signal 30 to be used for cross-correlation, which takes into account the special shape of the receiver output signal 29.

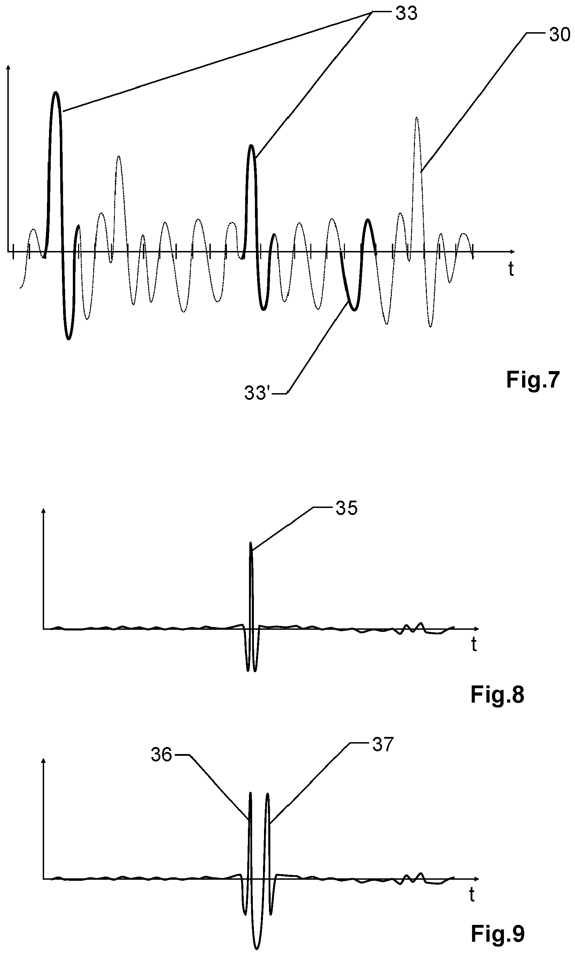

**Figure 7** shows a zoomed section of the reference signal 30 of Fig. 6 (the section being indicated by the dashed rectangle in Fig. 6). The reference signal is free of noise, wherein, for example, its oscillations are entirely generated by bipolar-like waveforms, also referred to as reference signal components. For example, every chip contains such a bipolar-like oscillation. Alternatively, as depicted by the figure, each bipolar-like waveform covers two chips, e.g. such that the start of a waveform component is at the start of all odd chips.

Each of the bipolar-like waveforms (reference signal components), has its own well-defined amplitude. These so-called primary amplitudes are real numbers and can be positive or negative. In the figure, two bipolar-like waveforms 33 with positive amplitude and one waveform 33' with negative amplitude are highlighted by bold lines. A waveform 33' with a negative amplitude is a bipolar-like oscillation (reference signal component) starting with a negative peak, whereas a waveform 33 with a positive amplitude is a bipolar like oscillation (reference signal component) starting with a positive peak. The oscillation components associated to the starting peaks of the waveform are also referred to as (positive or negative) main oscillation components, which, similar to the receiver output signal 29 (Fig. 6), die away before a next (positive or negative) main oscillation component of the next waveform (reference signal component) 33, 33' occurs. The oscillation components associated to the peak following the starting peak of the waveform are also referred to as (positive or negative) secondary oscillation components. According to the invention, the shapes of the bipolar-like waveforms 33, 33' of the reference signal 30, comprising of (positive or negative) main oscillation components and secondary oscillation components, correspond to the shapes of the waveforms of the receiver output signal 29, comprising primary and secondary main swing components 31, 32 (Fig. 6).

To summarize, two corresponding main and secondary oscillation components form a so-called reference signal component 33, 33', which takes up the bipolar shape of the expected receiver output signal components associated to individual emitted light pulses. As an example, three of the reference signal components of the reference signal 30 are highlighted in bold in the figure, namely two reference signal components 33 comprising (i.e. starting with) a positive main oscillation component and one reference signal component 33' comprising (i.e. starting with) a negative main oscillation component.

For an emission code sequence with N chips the length of the reference signal is larger than N since the fidelity of the pulse compression is increased. In the terminology of signal processing, the reference function can be considered as a mismatched filter. Mismatched filters are preferably designed with a length of 3N or 5N, but also other lengths are possible, e.g. such as 1.8N or 2.2N.

By, executing a cross-correlation between the measured receiver output signal 29 (Fig. 6) and the reference signal 30 a well-behaved pulse compression is achieved also for the bipolar expected receiver output signal. Thus, the cross-correlation results in a cross-correlation function as schematically depicted by **Fig. 8,** which comprises a compressed pulse 35 that can be identified and timed by the distance measuring module.

Often, better side-lobe suppression, especially with aperiodic coded signals with length N, is achieved by using mismatched filters (=reference signals) of a length greater than N, e.g. 3N or 5N. N is the length or equivalently the number of chips of an emitted coded pulse sequence. Usually mismatched filters are several times longer than the original code (length N), and they comprise precise analog amplitudes to yield a sufficient side-lobe suppression.

Orthogonal codes, for example Walsh codes, could also be used. These codes are designed to have little or no cross-correlation (which means for all time shifts different to zero the correlation value is close to zero) so that they may be discriminated from one another. For example, this may be beneficial in case two or more surveying devices are operated on the same site. When a distance measuring module receives modulated pulses from another distance measuring module, while receiving the pulses from its own laser diode reflected at the target, then the demodulator is able to distinguish its own pulse code from the other.

By way of example, using the unipolar zero-padded Barker code 13 $a_k$={1 0 1 0 1 0 1 0 1 0 0 0 0 0 1 0 1 0 0 0 1 0 0 0 1 0 } of length N=26 chips gives the expected analog signal $s_{sig}(t)$ reflected from a target at a time-of-flight of $t_{TOF}$ as

$$s_{sig}(t) := \sum_{k=0}^{N-1} (a_k \cdot wav(t - t_{TOF} - k \cdot t_c))$$

The received analog and continuous signal consists of a series of bipolar pulselets according to the emitted laser pulses at coding time intervals $t_c$, wherein $t_c$ denotes the chip length. The receive analog and continuous signal is sampled at a high sampling rate at sampling times $t_n$ given by the ADC.

The reference function $s3N_{ref}(t)$ is of length M=3*N and has the form

$$s3N_{ref}(t) := \sum_{k=0}^{3 \cdot N-1} (r3N_k \cdot wav(t - k \cdot t_c))$$

Also the reference signal $s3N_{ref}(t)$ is represented in a sampled manner, e.g. with sampling times $t_n$ corresponding to the time interval of the ADC, which yields the series $s3N_{ref}(t_n)$, but any other pseudo-continuous representation is possible.

As described above, the reference function $s3N_{ref}(t)$ is configured to have the same waveform per chip than the expected sub-pulses of the electronic receiver output signal.

The cross-correlation between the reflected and received analog signal $s_{sig}(t)$, or more precisely between the pseudo-continuous signal $s_{sig}(t_n)$ and the pseudo-continuous reference function $s3N_{ref}(t_n)$ yields the pulse compression signal $Cor3N(\tau)$ as

$$Cor3N(\tau) := \sum_{n=0}^{N_0-1} (s_{sig}(t_n) \cdot s3N_{ref}(t_n - \tau))$$

wherein $\tau$ represents the delay time or the time shift between the two signals, which is the (new) time axis of the received compressed signal. $N_o$ is the number of samples along the time axis, which covers at least the length of the filter $s3N_{ref}(t_n)$. During a measurement operation, the compressed output signal $Cor3N(\tau)$ is continuously inspected along the time axis $\tau$ if a compressed peak occurs. If a compressed peak is detected, an identification process is carried out and the time $\tau$ of the closest sample to the compressed peak is stored, which, up to an offset, corresponds to the time-of-flight (TOF). Succeeding this coarse TOF estimation, a fine TOF estimation is performed, e.g. by interpolation of the waveform between the time samples to extract the true maximum of the compressed main peak.

The width of the main peak of the compressed pulse 35 corresponds to the chip time, wherein the compressed pulse 35 behaves similar as when only a single strong laser pulse would have been received. As a result, sensitivity and time resolution becomes closer to the sensitivity and time resolution of a distance measuring module which uses a single strong laser pulse emitted by a medium to high power fiber laser instead to that of a laser diode with weaker pulsed emission. This full benefit is valid for the single echo case or when two targets are separated by more than two chips. There are other mismatched filters which also work with closely spaced targets, wherein such filters yield a sufficient quality of the Peak Side Lobe Ratio for multiple target returns or echoes, which are separated by a shorter time interval than the length of the reference function. However to take advantage of a good Peak Side Lobe Ratio, the design procedure for establishing the reference function beneficially includes multiple target returns.

Finding an optimized mismatched filter for the pulse compression is illustrated by the following example for a mismatched filter of length M=3*N chips. The filter elements of the reference function are R = {r1, r2, .. , rM} and the filter elements of the emission code sequence are S = {0, 0, .. , 0, R, 0, 0, .. , 0, }, wherein the length of S is increased by filling up with zeros to match the length M=3N. Coding R and decoding S is primarily started with a sequence of chips, wherein the pseudo-continuous waveform is applied in a later design step.

The filter coefficients can be found by maximizing the peak side lobe ratio PSLR of the cross-correlation function $Cor(\tau)$ for all delays within the lengths of the reference function R, wherein

$$PSLR := \left( \frac{\max(|Cor(\tau)|)}{Cor(\tau_{peak})} \right)^2$$

for $\tau$ outside $\tau_{peak}$ +/- 0.5 $t_c$, wherein the cross-correlation $Cor(\tau)$ will peak at a delay $\tau_{peak}$=0.

The search of the maximum of the peak side lobe ratio PSLR can be done in integer steps of $t_c$, wherein $t_c$ represents the chip length, so the search ranges from k=-1N to +1N. Also the calculation of $Cor(\tau_{peak})$ can be done at integer points, which accelerates the search for the filter coefficients R = {r1, r2, .. , rM}. Optimization of the filter elements is a cumbersome process, stochastic optimization techniques such as Monte Carlo simulation can be used with adequate selected starting vectors Ro.

By way of example, when the Barker Code 11 is applied, then the starting vector for Ro is just the bipolar Barker Code 11. The starting values of the reference signal becomes R = {r1=0, 0, .. , rN=0, Barker Code 11, r2N+1=0, 0, .. , r3N=0}. According to the equation above for PSLR, $Cor(\tau_{peak})$ can be calculated by taking the unipolar coding described above and correlating it with the bipolar Barker Code 11. In a next step the signal is shifted or stepped to the left side chip-by-chip and a first guess of the coefficients rN, rN-1, ... r1 is obtained when setting the correlation function $Cor(\tau_k)$ for each step zero. Then the same is evaluated for the coefficients r2N+1, r2N+2, ... r3N by stepping chip-by-chip to the right side until all coefficients of R are determined. The amplitude values rk can take any positive or negative value. This intermediate reference function may not be optimal, because of side lobes arising for shifts outside the considered delays. A further step of optimization can be applied, e.g. by a stochastic optimization technique, wherein in this loop all coefficients are unfreezed to be varied to achieve the amplitudes of an optimum reference function. After this optimization step, the final continuous reference function is built up by taking the bipolar-like waveform of the expected receiver output signal component and multiplying it by the above calculated amplitudes R. The recipe given here indicates that the longer the reference function the better will become the PSLR for pulse compression.

Another, e.g. weaker but sometimes preferably simpler, way to define an appropriate mismatched filter is minimizing the integrated side lobe energy ISLR

$$ISLR := \frac{1}{Cor(\tau_{peak})^2} \cdot \left[ \sum_{(\tau \neq 0)} Cor(\tau)^2 \right]$$

wherein the cross-correlation $Cor(\tau)$ again will peak at delay $\tau_{peak}$=0.

Further simplification may be achieved when minimizing the merit function ISLRr

$$ISLR_r := \left[ \sum_{(\tau \neq 0)} Cor(\tau)^2 \right] = min$$

The search of the minimum of ISLRr again can be done in integer steps of $t_c$, so the search ranges from k=-1N to +1N. Also the calculation of Cor($\tau_{peak}$) can be done at integer points, which accelerates the search for the filter coefficients R = {r1, r2, .. , rM}.

By way of example, short unipolar pulse sequence consisting of maximum ten pulses is used, wherein the length of a pulse sequence not longer than 4*10 = N chips. Laser pulses are all of the same length covering typically less than one chip to keep the photons confined in a well-defined short time interval. The received pulses are converted into bipolar-like electrical pulses and a mismatched filter of length 3N is used as reference, wherein pulse compression is applied to the bipolar received pulse shapes (waveforms). Optionally, at least two different emission codings are applied to solve distance ambiguities.

In case of a so-called two-target case with strong pulse overlap, the received signal comprises two echoes, e.g. separated by less than three chips. By way of example, with a code length of N=26 chips and 3.1N-3N = 0.1N = 2.6 chips target separation, mathematically the expected continuous and bipolar signal $s_{sig}(t)$ and the reference function $s3_{ref}(t)$ can be given for this case as continuous waveforms

$$s_{sig}(t) := \sum_{k=0}^{N-1} (a_k \cdot wav(t - 3 \cdot N \cdot t_c - k \cdot t_c) + a_k \cdot wav(t - 3.1 \cdot N \cdot t_c - k \cdot t_c))$$

$$s3_{ref}(t) := \sum_{k=0}^{3N-1} (r3_k \cdot wav(t - k \cdot t_c))$$

The function "wav" represents the bipolar or sinus-like impulse response of the receiver in front of the ADC, wherein the same impulse response is included in the reference signal for pulse compression.

The pulse compression Cor3($\tau$) is done by a convolution between the two signals and can be written as as

$$Cor3(\tau) := \sum_{n=0}^{Ntime-1} (s_{sig}(t_n) \cdot s3_{ref}(t_n - \tau))$$

which yields a cross-correlation function versus time delay $\tau$ as schematically depicted by Fig. 9, which comprises two compressed pulses 36, 37 that can be identified and timed by the distance measuring module. Thus, the two targets can be separated although they lie within the length of the emitted pulse sequence.

The reference function $s3_{ref}(t)$ used for the two-target case can be the same as for the single target case. However as discussed above it is also possible to provide an improved reference function $s2Tgt_{ref}(t)$ with an increased peak-to-sidelobe-ratio (SLR) of the compressed signal for the case of overlapping double target returns (also referred to as mixed pixel case). To derive an optimized reference function $s2Tgt_{ref}(t)$, a new merit function is needed. One way is to maximize a merit function, which includes the SLRs of different received double-echo signals related to differently separated targets. This merit function is, for example, the weighted sum of the SLRs of the cross-correlations between the different double echo signals and the common reference function $s2Tgt_{ref}(t)$ with the unknown parameters R = {r1, r2, .. , rM}. By maximizing the merit function, the optimization outputs the amplitude coefficients R.

Pulse compression done in real time by correlating continuous reference functions requires rather intensive processing resources, despite of a sampling corresponding to a rate of the ADC (so-called pseudo-continuous reference function). One possibility to allow efficient high-speed real time data processing, e.g. to allow on-board real time data processing on an FPGA of moderate processing power, is to transform the bipolar continuous reference function into a discrete filter sequence of spare samples or coefficients.

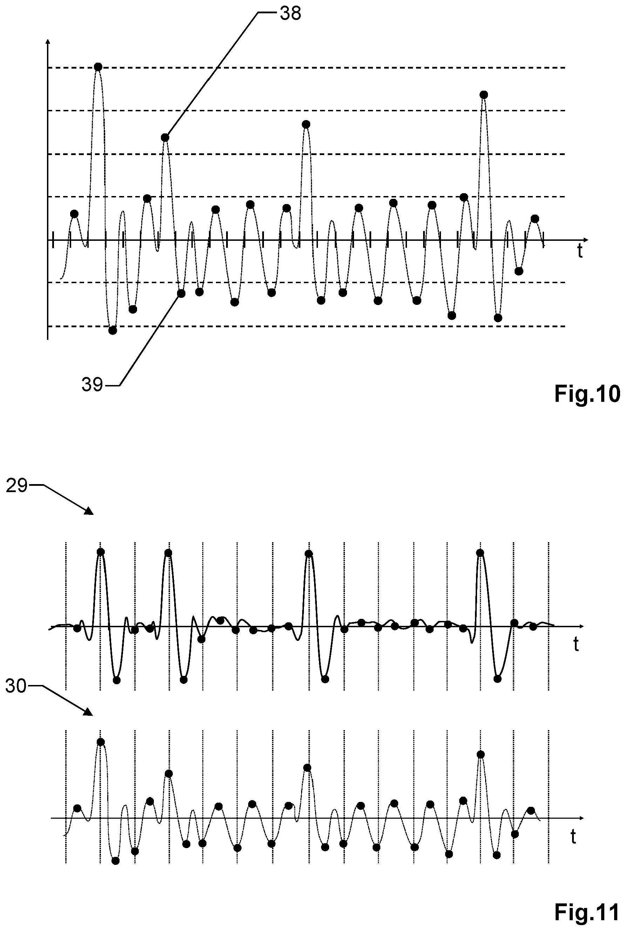

The continuous bipolar reference function takes up ("matches") for each chip the pulse waveform of the receiver electronics, wherein the waveforms are responses to the detected laser pulses. By way of example, for generating a discrete reference signal the chip-wise waveforms are converted to two digital values taken at the maxima 38 and close to the minima 39 of the analog continuous waveforms as indicated by Fig. 10.

By way of example, the discrete reference sequence adapted to the sinusoidal shape of the chip-wise waveforms is taken by samples at intervals of the chip length in phase of the maximum and the minimum values of the sinus, wherein the primary swing component 31 is sampled at its extremal point and the secondary main swing component 32 is sampled rather close to its extremal point. By this method a discrete reference sequence is generates, which simplifies the processing of the cross-correlation. For cross-correlation and thus pulse compression, the time samples of the emission code sequence are taken at times corresponding to the chip-intervals. By this transformation the number density of elements of the reference function can be diluted down to a single amplitude value within one chip-interval.

Since a coding unit controls the chip intervals of the emitter and the sampling points of the ADC at the receiver, time samples of the emission code sequence and the discrete reference sequence are synchronized, wherein the sample intervals can differ by an integer or rational number. Since the Nyquist-Shannon sampling theorem must be fulfilled, the sampling density of the receiver output signal 29 is typically higher by an integer or rational factor of the chip density. For cross-correlation, a diluted subset of the sampled signal data may be taken, which matches the chip interval of the reference sequence. When calculating the cross-correlation, the subsets are shifted by the finer time intervals of the sampled receiver output signal 29 such that no information is lost.

An example is schematically depicted by **Fig. 11** with a diluted subset of the sampled receiver output signal 29, where chip intervals and time samples of the subset are fully synchronized, thereby providing two samples per chip for both the receiver output signal 29 and the reference signal 30. Only one of the diluted sampling patterns of the receiver output signal 29 is taken when calculating the cross-correlation coefficients. By calculating the cross-correlation coefficients, the discrete reference sequence is shifted along the originally fine sampled receiver output signal, wherein the samples of the matching subsets are taken.

For example, discrete pulse compression $PCompr_{kdsc}$ of samples of the received signal by using the discrete reference can be formulated as

$$PCompr_{kdsc} := \sum_{n=0}^{3 \cdot N - 1} (sigd_{n+kdsc} \cdot r3d_n)$$

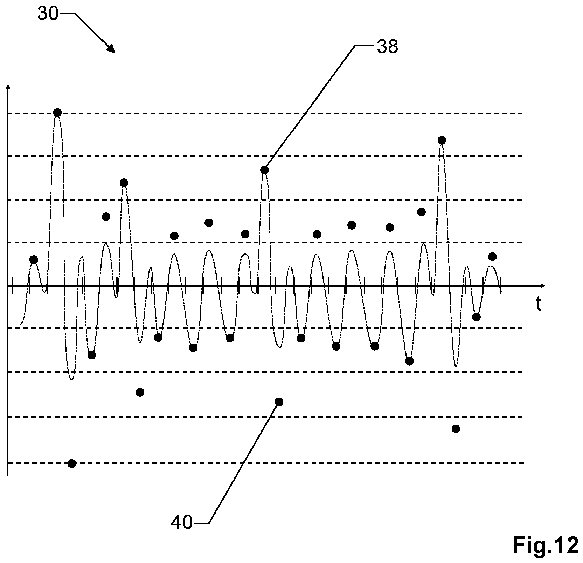

**Figure 12** schematically depicts another way to derive a discrete reference function, wherein, instead of sampling the maxima and minima of the analog continuous waveforms as depicted by Fig. 10, the continuous bipolar pulses are represented by pairs of opposite amplitudes. For example, for each of the waveforms the sign of the extremal value 38 is changed to form a corresponding "mirrored" value 40. When the waveform starts with a positive amplitude then the positive maximum is taken as a coefficient for the reference function and the following coefficient is the same value but negative. When the waveform starts with a negative amplitude then the negative minimum is taken as a coefficient for the reference function and the next coefficient is the same value but positive. Thus, a discrete reference signal comprising values for the waveform extremal values 38 and mirrored values 40 of the waveform extremal values is generated from the analog continuous reference signal 30.

Although the invention is illustrated above, partly with reference to some preferred embodiments, it must be understood that numerous modifications and combinations of different features of the embodiments can be made. All of these modifications lie within the scope of the appended claims.

## Claims

1. Opto-electronic distance measuring module configured for use in a surveying device (1), wherein the distance measuring module comprises an emission unit (24) with a laser diode or a low power fiber laser and is configured to provide for

   • emission of light pulses (18) by the laser diode or the low power fiber laser, wherein the light pulses (18) form a finite emission code sequence (16, 16') with N chips (17), in particular a code sequence with minimal autocorrelation, and
   • processing of a return signal that corresponds to emitted light pulses returning from a target in the environment to generate a measured receiver output signal (29), wherein in an ideal case the measured receiver output signal (29) has a shape of an expected receiver output signal formed by expected receiver output signal components of bipolar shape, wherein each of the expected receiver output signal components can be assigned to a respective light pulse (18),

**characterized in that**
the distance measuring module is configured to
• provide a reference signal (30) that is similar to the expected receiver output signal and encodes reference pulses forming a finite reference code sequence with a number of chips (17) larger than N, wherein the reference signal (30) is formed by reference signal components (33, 33') which take up the bipolar shape of the expected receiver output signal components and wherein each of the reference signal components (33, 33') can be assigned to a respective reference pulse of the reference code sequence,
• execute a cross-correlation between the measured receiver output signal (29) and the reference signal (30) to generate a cross-correlation function, and
• identify and time a compressed pulse (35, 36, 37) in the cross-correlation function.

2. Distance measuring module according to claim 1, wherein the number of chips (17) of the reference code sequence is three times N, four times N, or five times N.

3. Distance measuring module according to one of the preceding claims, wherein the emission code sequence (16, 16') is a unipolar pulse sequence of less than 32 pulses (18).

4. Distance measuring module according to claim 3, wherein the unipolar pulse sequence corresponds to a code with a bipolar pulse pattern (20), particularly one of a Barker code, an Ipatiov code, an M-Sequence, and a Legendre sequence, wherein either the negative (19) or positive values of the code with the bipolar pulse pattern (20) are set to zero and in return the light pulses correspond to the positive or negative values of the code with the bipolar pulse pattern (20).

5. Distance measuring module according to claim 4, wherein additional chips (17) with value zero are added between neighboring chips of the code with the bipolar pulse pattern (20) to form the emission code sequence.

6. Distance measuring module according to one of the preceding claims, wherein the reference signal (30) is a continuous signal with several extrema, wherein each of the reference signal components (33, 33') is a continuous functional section of the reference signal (30) with two extrema.

7. Distance measuring module according to one of the preceding claims, wherein the processing of the return signal is provided in such a way that the expected receiver output signal components all have the same temporal signal width, wherein the reference signal (30) is provided in such a way that each of the reference signal components (33, 33') has the same temporal signal width as the expected receiver output signal components.

8. Distance measuring module according to one of the preceding claims, wherein the reference signal (30) is a discrete signal with several positive and negative values, wherein each of the reference signal components comprises a positive (38) and a negative value (39), particularly wherein the positive and negative value have the same absolute value.

9. Distance measuring module according to claim 8, wherein each of the reference signal components is comprised by two neighboring chips (17), wherein one of the two neighboring chips comprises the positive value (38) and the other of the two neighboring chips comprises the negative value (39).

10. Distance measuring module according to one of claims 8 or 9, wherein for the cross-correlation time samples of the measured receiver output signal (29) are taken at times corresponding to a chip-interval of the reference signal (30), particularly wherein a coding unit of the distance measuring module is configured to control the chip interval of the emission of the finite emission code sequence (16, 16') and sampling points of an analog-to-digital converter of the distance measuring module used for analyzing the measured receiver output signal (29).

11. Distance measuring module according to one of the preceding claims, configured to identify the compressed pulse (35, 36, 37) in a digital representation of the cross-correlation function, and to provide upon detection of the compressed pulse (35, 36, 37) an interpolation of the compressed pulse between sampling points of the digital representation of the cross-correlation function to time the compressed pulse.
in particular wherein a sampling interpolation algorithm configured to locate a peak of the compressed pulse with sub-picosecond accuracy is used or wherein a resampling method to handle a sampled compressed pulse as an analog continuous signal is used which yields a precision down to the Cramer Rao limit.

**12.** Distance measuring module according to one of the preceding claims, wherein the reference signal (30) is provided by an optimization using a merit function, wherein the merit function is a weighted sum of functions expressing side lobe ratios of cross-correlations between a common reference function and different candidate receiver output signals associated to expected receiver output signals for different double-echoes of a received light pulse, wherein the different double-echoes differ from each other by different pulse spacings between the echoes of the received light pulse and the common reference function is associated to one of the different pulse spacings.

**13.** Distance measuring module according to one of the preceding claims, wherein the distance measuring module is configured to

  • coordinate the emission of the light pulses (18) to generate different finite emission code sequences (16, 16') with N chips each, wherein each of the different finite emission code sequences is associated to a respective expected receiver output signal formed by expected receiver output signal components of bipolar shape, wherein each of the expected receiver output signal components can be assigned to a respective light pulse (18), and
  • to provide different reference signals (30), wherein each of the different reference signals is similar to a different one of the expected receiver output signals and encodes reference pulses forming a finite reference code sequence with a number of chips larger than N,
  • execute cross-correlations between the measured receiver output signal (29) with each of the different reference signals in parallel to generate cross-correlation functions associated to each of the different reference signals, and
  • identify and time a compressed pulse (35, 36, 37) in each of the cross-correlation functions and associate each of the compressed pulses to a respective one of different finite emission code sequences (16, 16').

**14.** Distance measuring module according to claim 13, configured to provide a sequential emission pattern of the different finite emission code sequences (16, 16') and compare the sequential emission pattern with the timing of the compressed pulses associated to each of the cross-correlation functions to provide for range ambiguity correction.

**15.** Surveying device (1) for the three-dimensional spatial measurement of an environment by an optical distance measuring beam (15), particularly wherein the surveying device (1) is embodied as tachymeter, total station, laser profiler, or laser scanner, wherein the surveying device comprises an opto-electronic distance measuring module according to one of claims 1 to 14.

**Fig.1**

**Fig.2**

**Fig.3**

**Fig.4**

**Fig.5**

**Fig.6**

**Fig.7**

**Fig.8**

**Fig.9**

Fig.10

Fig.11

Fig.12

Europäisches Patentamt
European Patent Office
Office européen des brevets

# EUROPEAN SEARCH REPORT

**Application Number**

EP 21 21 6246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KRAVITZ D ET AL: "High-Resolution Low-Sidelobe Laser Ranging Based on Incoherent Pulse Compression", IEEE PHOTONICS TECHNOLOGY LETTERS, IEEE, USA, vol. 24, no. 23, 1 December 2012 (2012-12-01), pages 2119-2121, XP011488535, ISSN: 1041-1135, DOI: 10.1109/LPT.2012.2222367 | 1-4,7-15 | INV.<br>G01S7/484<br>G01S7/4865<br>G01S7/487<br>G01S17/10<br><br>ADD.<br>G01S17/42<br>G01S17/86<br>G01S17/89 |
| Y | * abstract; figures 1(b), 3 - 5 *<br>* section I, first and last paragraph *<br>* section II, first and last paragraph *<br>* section III, first to third and last paragraph *<br>* section IV, last paragraph *<br>----- | 5,6 | |
| X | LINDENFELD MICHAEL J: "Mismatched Filters for Incoherent Pulse Compression in Laser Radar", IEEE TRANSACTIONS ON AEROSPACE AND ELECTRONIC SYSTEMS, IEEE SERVICE CENTER, PISCATAWAY, NJ, US, vol. 57, no. 2, 16 November 2020 (2020-11-16), pages 1252-1260, XP011848616, ISSN: 0018-9251, DOI: 10.1109/TAES.2020.3038256 [retrieved on 2021-04-09] | 1-4,6,7, 11-15 | |
| Y | * abstract; figure 2 *<br>* section II, first and second paragraph *<br>----- | 5 | TECHNICAL FIELDS SEARCHED (IPC)<br><br>G01S |

-/--

The present search report has been drawn up for all claims

| Place of search | Date of completion of the search | Examiner |
|---|---|---|
| Munich | 18 May 2022 | Knoll, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | Application Number<br>**EP 21 21 6246** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ALZUHIRI MOHAND ET AL: "Enhanced pulsed thermoacoustic imaging by noncoherent pulse compression", JOURNAL OF APPLIED PHYSICS, AMERICAN INSTITUTE OF PHYSICS, 2 HUNTINGTON QUADRANGLE, MELVILLE, NY 11747, vol. 130, no. 17, 4 November 2021 (2021-11-04), XP012260943, ISSN: 0021-8979, DOI: 10.1063/5.0062148 [retrieved on 2021-11-04] * abstract; figure 2(b) * * section II.B.1. * ----- | 5,6 | |

TECHNICAL FIELDS SEARCHED (IPC)

The present search report has been drawn up for all claims

| Place of search | Date of completion of the search | Examiner |
|---|---|---|
| Munich | 18 May 2022 | Knoll, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2